# EUROPEAN PATENT APPLICATION

(11) **EP 2 690 685 A1**
(43) Date of publication of application: **29.01.2014**
(21) Application number: 12177689.2
(22) Date of filing: 24.07.2012
(51) Int. Cl.: H01M 4/04, H01M 4/52, H01M 10/39, H01M 4/38

(54) **Cathode for sodium-metal halide battery, battery comprising the same, methods for preparing the same and use thereof**

(71) Applicant: General Electric Company, Schenectady, NY 12345 (US)
(72) Inventor: Wu, Huiqing, Niskayuna, NY New York 12309 (US); Vallance, Michael Alan, Niskayuna, NY New York 12309 (US)
(74) Representative: Illingworth-Law, William Illingworth

(57) **Abstract**

The present invention relates to a cathode for a sodium-metal halide battery, a battery comprising the same, methods for preparing the same and use thereof. A metal microwire is added into the cathode. The metal microwire builds a secondary grid other than a cathode grid, and thus improves the cathode conductivity and the stability of its conductive network, thereby decreasing internal resistance of the battery and improving discharge power of the battery.

## Description

### BACKGROUND

The present invention relates to a cathode for a sodium-metal halide battery, a sodium-metal halide battery comprising the same, methods for preparing the cathode and the battery, and use of the battery.

The sodium-metal halide battery appeared in the 1990's as a new generation of high temperature rechargeable batteries. Due to its large energy density, high cycle life, improved safety, and high temperature stability, it can be used in various applications such as hybrid vehicles, uninterruptable power supply, and the like.

In the present sodium-metal halide battery, a mixture of active materials is loaded in the form of millimeter-scale granules, and metal powders inside the granules form a foam like network to conduct electronic current. For example, in some of the contemplated designs for sodium-nickel halide battery cells, the cathode grid is formed from various types of nickel powder. Based on the volume inside the granules, the volume fraction of the conductive material Ni is about 20-30%, which is enough to reach a percolation threshold. However, since the material forming the granules only accounts for about 50% of the total volume of the cathode, the average volume fraction of the conductive material in the cathode is about 10-15%. Ni migrates with repeated cycling of the battery, which causes the cathode electronic conductivity to degrade. Consequently, the internal resistance of the battery cell increases.

It is well known that low internal resistance is critical for high battery discharge power, which is an important requirement for high power applications. It can be seen from the above that sodium-metal halide batteries may still sometimes exhibit problems with cycling-induced increased internal resistance, and thus deteriorated discharge power. Moreover, there is a need for increased initial discharge power performance.

Thus, some of the sodium-metal halide batteries can continue to benefit from improvements in certain aspects and characteristics.

### BRIEF DESCRIPTION

An object of the present invention is to improve conductivity of a cathode for a sodium-metal halide battery, thereby decreasing internal resistance of the battery and improving battery discharge power.

According to an embodiment of the present invention, a cathode for a sodium-metal halide battery is provided, wherein a metal microwire is added into the cathode, that is, the cathode comprises the metal microwire.

According to an embodiment of the present invention, a sodium-metal halide battery comprising a cathode is provided.

According to an embodiment of the present invention, a method for preparing the cathode for a sodium-metal halide battery is provided, wherein the metal microwire is added during a granulation process of active material and/or a cathode filling process.

According to an embodiment of the present invention, a method for preparing the sodium-metal halide battery is provided, wherein the metal microwire is added during a granulation process of active material and/or a cathode filling process.

According to an embodiment of the present invention, use of the sodium-metal halide battery as an uninterruptable power supply is provided.

These and other advantages and features will be more readily understood from the following detailed description of embodiments of the present invention, that are provided in connection with the accompanying drawings.

### BRIEF DESCRIPTION OF THE DRAWINGS

FIG. 1 is a micrograph of Ni metal microwire used in a cathode for a sodium-metal halide battery according an embodiment of the present invention.
FIG. 2a is a top view illustrating a portion of the structure of a sodium-metal halide battery according to an embodiment of the present invention.
FIG. 2b is a side view illustrating a portion of the structure of the sodium-metal halide battery according to an embodiment of the present invention.
FIG. 3 is a graph illustrating discharge time with respect to discharge power of batteries manufactured according to Examples 1 and 2, along with a Comparative Example. The present invention.

### DETAILED DESCRIPTION

The present invention provides a cathode for a sodium-metal halide battery. A metal microwire is added into the cathode for a sodium-metal halide battery of the present invention. The metal microwire reinforces the electronically conducting cathode grid, and thus improves the electronic conductivity of the cathode, and the stability of its conductive network, thereby decreasing internal resistance of the battery cell, and improving the discharge power of the battery. In addition, use of the microwire can potentially extend the battery lifetime.

The metal or metal alloy for the microwire used in the cathode of the present invention is electrochemically stable. In particular, no redox reaction occurs on said metal or metal alloy of metal microwire in the voltage range of charging and discharging of said battery. However, in those cases in which a redox rection does occur, it is usually a reversible reaction. Such a reaction should be confined to a minor portion of the microwire. That is, when the metal microwire is oxidized to a certain depth, the dynamic process of the electrochemical oxidation reaction is slow enough to be negligible. The electrochemical reaction is limited by surface passivation, much like aluminum stops oxidizing after a thin aluminum oxide film forms on the surface. In this way, the metal microwire will not be completely dissolved with cycling of the battery so that the conductivity of the cathode is improved. The resistivity of the metal of metal microwire is 10⁻⁶ Ω·cm or less. Exemplary microwire metals include at least one selected from the group consisting of nickel, molybdenum, and tungsten, but are not limited thereto.

In one embodiment of the present invention, the metal microwire has an aspect ratio of greater than 10, preferably greater than 20, and less than or equal to 100. The metal microwire has a diameter of 1 micron to 1 millimeter, preferably 1 micron to 200 microns, more preferably 1 micron to 100 microns, and most preferably 10 to 100 microns, and a length of 1 mm to 20mm, and preferably 1 mm to 10mm.

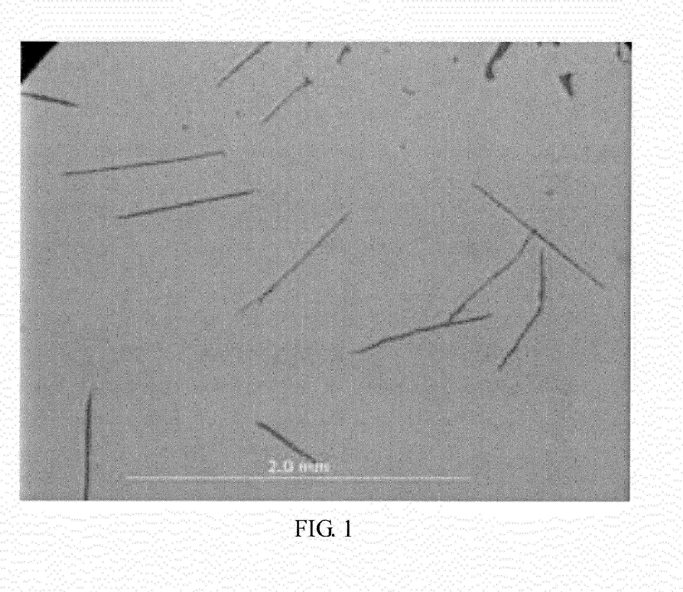

For example, the metal microwire used in examples of the present invention can be a nickel fibre having a diameter of less than 100 microns and a length of 1 mm to 3mm. Its micrograph is shown in FIG. 1.

In one embodiment of the present invention, a volume fraction of the metal microwire is greater than a percolation threshold. When the volume fraction of the metal microwire is greater than the percolation threshold, a continuous conductive network can be built, thereby further improving the conductivity of the cathode. The percolation threshold is a value based on a percolation theory. It can be calculated though mathematical model, or can be measured by experiment. For example, reference can be made to E.J. Garboczi, K.A. Snyder, J. F. Douglas, Geometrical percolation threshold of overlapping ellipsoids, Physical Review E, Volume 52, Number 1.

In one embodiment of the present invention, the metal microwire can be inter-granular of active cathode material and/or intra-granular of active cathode material when the active material has been granulated. In particular, if the metal microwire and the active material are mixed together to be granulated during the granulation process of active material, the metal microwire is intra-granular of active material. If the metal microwire is added to the granules of active material during a cathode filling process, after the granulation process of active material, the metal microwire is inter-granular of active material.

The active material used in the cathode of the present invention can be any active material commonly used in the field. The active material includes nickel powder, sodium chloride and other additive(s). For example, the active material may include: 40 to 70 wt% of nickel (Ni) powder, 30 to 50 wt% of sodium chloride (NaCl), 0.1 to 5 wt% of sodium fluoride (NaF), 0.1 to 5 wt% of aluminum (Al) powder, 0.1 to 1 wt% of sodium iodide (Nal), 0 to 20 wt% of iron (Fe) powder, 0 to 10 wt% of zinc sulfide (ZnS), and 0 to 10 wt% of iron (II) sulfide (FeS).

The cathode according to the present invention can further include a catholyte. The catholyte can be any catholyte commonly used in the field, such as NaAlCl₄.

The present invention also provides a method for preparing the cathode for a sodium-metal halide battery cell. The method for preparing the cathode according to the present invention is the same as a method for preparing a cathode commonly used in the field, except that a metal microwire is added during a granulation process of active material and/or during a cathode filling process. When it is desired that the metal microwire is intra-granular of active material, the metal microwire and the active material are mixed together to be granulated during the granulation process. When it is desired that the metal microwire is inter-granular of active material, the metal microwire is added to be mixed with the granules of active material during the cathode filling process after granulation of the active material, and then the mixture is poured into a cathode compartment. When it is desired that the metal microwire is both inter-granular of active material and intra-granular of active material, both steps described above are carried out.

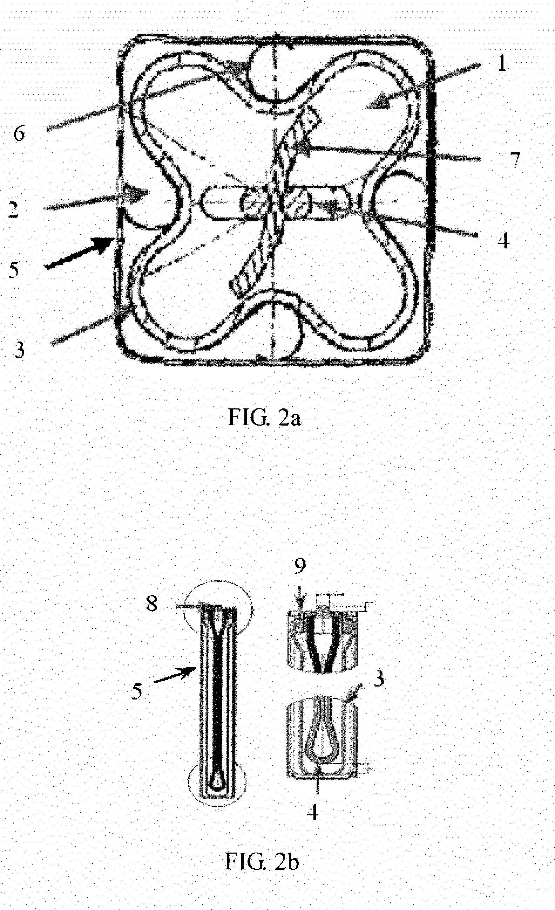

The present invention provides a sodium-metal halide battery that contains a cathode. The structure of the sodium-metal halide battery according to the present invention is described below by referring to FIGS. 2a and 2b. FIG. 2a is a top view illustrating the structure of the sodium-metal halide battery cell, and FIG. 2b is a side view illustrating the structure of the sodium-metal halide battery cell.

By referring to FIG. 2a, the sodium-metal halide battery cell according to the present invention includes: a cathode 1, an anode 2, a ceramic electrolyte 3, a cathode current collector 4, a case 5, and optionally, a shim 6 and a carbon fiber wick 7. By referring to FIG. 2b, the sodium-metal halide battery according to the present invention further includes: a cell filling port 8 and a sealing system 9.

In the sodium-metal halide battery cell according to the present invention, a cathode compartment is separated from an anode compartment by the ceramic electrolyte 3, wherein the cathode compartment is inside the ceramic electrolyte 3, and the anode compartment is between the ceramic electrolyte 3 and the case 5. The ceramic electrolyte 3 can be any ceramic electrolyte commonly used in the field, such as β-alumina.

The cathode 1 is accommodated in the cathode compartment. In the cathode 1, granules of active material (for example, nickel and sodium chloride) are impregnated or otherwise incorporated into a catholyte such as molten NaAlCl₄. A metal microwire is added to the cathode 1. The metal microwire can be inter-granular of active material and/or intra-granules of active material.

The anode 2 is accommodated (incorporated into) in the anode compartment. The anode 2 can be a sodium metal.

The cathode current collector 4 is also accommodated in the cathode compartment. The cathode current collector 4 can be any cathode current collector commonly used in the field, such as Ni.

The case 5 can be any case commonly used in the field. For example, the case 5 can be made of steel. The steel can be mild steel.

The shim 6 when present is used to ensure that the liquid level of sodium metal in the anode is equivalent to the level of active material in the cathode. The shim 6 can be made by any material commonly used in the field, such as mild steel.

The carbon fiber wick 7 is used to transport an electrolyte solution.

The cell filling port 8 is used to fill the granules of active material and the catholyte into the cathode compartment.

The sealing system 9 is used to seal the cathode and the anode from each other and from the external environment, while maintaining electronic isolation between the cathode and the anode. The sealing system 9 can be comprised of materials commonly used in the field, such as α-Al₂O₃, nickel and silica glass.

The present invention also provides a method for preparing the sodium-metal halide battery cell. The method for preparing the battery cell according to the present invention is the same as a method for preparing a battery cell commonly used in the field, except that during preparation of a cathode, as described above, a metal microwire is added during a granulation process of active material and/or a cathode filling process. Regarding other steps in the method for preparing the sodium-metal halide battery, they are the same as those commonly used in the field. Therefore, the detailed description is omitted herein.

The present invention also relates to the use of the sodium-metal halide battery, for example in an uninterruptable power supply.

The present invention is further described by reference to examples below. However, the examples are only exemplary, and not limiting of the present invention.

### Example 1

A cathode is prepared by granulating 220 to 240g of active material to obtain granules of active material, uniformly mixing the granules of active material with 20g of nickel microwire (diameter: 25 microns, length: 1 millimeter) as a metal microwire, adding the mixture of the granules of active material and the nickel microwire into a cathode compartment, and adding 110 to 120g of NaAlCl₄ as a catholyte into the cathode compartment. The active material includes: 40 to 70 wt% of nickel (Ni) powder, 30 to 50 wt% of sodium chloride (NaCl), 0.1 to 5 wt% of sodium fluoride (NaF), 0.1 to 5 wt% of aluminum (Al) powder, 0.1 to 1 wt% of sodium iodide (Nal), 0 to 20 wt% of iron (Fe) powder, 0 to 10 wt% of zinc sulfide (ZnS), and 0 to 10 wt% of iron (II) sulfide (FeS).

The anode compartment need not initially contain sodium metal, since the sodium metal will be produced during charging of the cell.. The cathode and the anode are separated by β-alumina as a ceramic electrolyte. A cathode current collector is a U-shaped nickel rod having a diameter of 3.0 to 4.0mm. A sodium-nickel chloride battery is manufactured from the above cathode, anode, cathode current collector, and ceramic electrolyte by a common method in the field.

### Example 2

A sodium-nickel chloride cell is manufactured in the same manner as in Example 1, except that the granules of active material are mixed with 30g of nickel microwire as a metal microwire.

### Comparative Example

A sodium-nickel chloride cell is manufactured in the same manner as in Example 1, except that no metal microwire is added.

### Evaluation Example

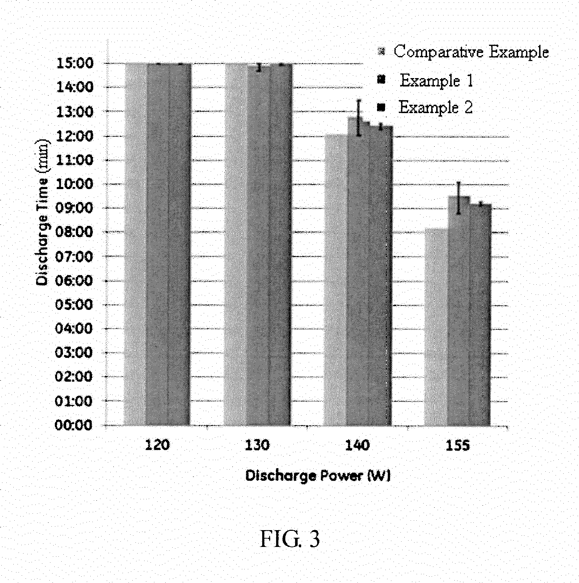

The performance of the sodium-nickel chloride cells manufactured according to Examples 1 and 2 and Comparative Example are evaluated by using an electrochemical cycling testing machine (Digatron) as follows: respectively discharging at constant temperature of 300°C, and at a constant power of 120, 130, 140, and 155W, until the voltage reaches 1.8V or after 15 minutes. The results are shown in FIG. 3.

It can be seen from FIG. 3 that when discharging at lower power levels of 120W and 130W, the cells manufactured according to Examples 1 and 2, and the Comparative Example achieve the maximum discharge time; and when discharging at higher power levels of 140W and 155W, the batteries manufactured according to Examples 1 and 2 show longer discharge times than the battery manufacture according to the Comparative Example, which indicates that the battery discharge power is improved by adding the metal microwire into the cathode for a sodium-metal halide battery.

While the invention has been described in detail in connection with particular embodiments, it should be understood that the invention is not limited to such disclosed embodiments. Rather, the invention can be modified to incorporate any number of variations, alterations, substitutions or equivalent arrangements not heretofore described, but which are commensurate with the spirit and scope of the invention.

## Claims

1. A cathode for a sodium-metal halide battery, wherein a metal microwire is added into the cathode.

2. The cathode of claim 1, wherein said metal of metal microwire is electrochemically stable.

3. The cathode of claim 1 or claim 2, wherein no redox reaction occurs on said metal of metal microwire in the voltage range of charging and discharging of said battery.

4. The cathode of any preceding claim, wherien redox reaction of said metal of metal microwire in the voltage range of charging and discharging of said battery is reversible, and the redox reaction is confined to a minor portion of the microwire.

5. The cathode of any preceding claim, wherein said metal of metal microwire is at least one selected from the group consisting of nickel, molybdenum, and tungsten.

6. The cathode of any preceding claim, wherein said metal microwire has an aspect ratio of greater than 10.

7. The cathode of any preceding claim, wherein said metal microwire has a diameter in the range of 1 micron to 1 millimeter, and a length in the range of 1mm to 2 cm.

8. The cathode of any preceding claim, wherein said metal microwire has a diameter of 1 to 100 microns and a length of 1 mm to 1 cm.

9. The cathode of any preceding claim, wherein a volume fraction of said metal microwire is greater than a percolation threshold.

10. The cathode of any preceding claim, wherein said metal microwire is located outside of and between granules of active cathode material and/or inside of the granules of active cathode material when the active material has been granulated.

11. A sodium-metal halide battery, comprising: the cathode of any of claims 1-10; an anode; and an electrolyte.

12. The sodium-metal halide battery of claim 11, wherein said sodium-metal halide battery is a sodium-nickel chloride battery.

13. A method for preparing the cathode for a sodium-metal halide battery of any of claims 1-10, wherein the metal microwire is added during a granulation process of active material and/or during a cathode filling process.

14. A method for preparing the sodium-metal halide battery of claims 11 or 12, wherein the metal microwire is added during a granulation process of active material and/or during a cathode filling process.

15. Use of the sodium-metal halide battery of claim 11 or 12 in an uninterruptable power supply.
